# EUROPÄISCHE PATENTSCHRIFT

(11) **EP 1 105 931 B1**
(45) Veröffentlichungstag und Bekanntmachung des Hinweises auf die Patenterteilung: **24.04.2002**
(21) Anmeldenummer: 99931150.9
(22) Anmeldetag: 23.06.1999
(51) Int. Cl.: H01M 8/06, H01M 8/04, C10K 3/04, C01B 3/50

(54) **BRENNSTOFFZELLENSYSTEM**
FUEL CELL SYSTEM
SYSTEME DE PILES A COMBUSTIBLE

(30) Priorität: 18.07.1998 DE 19832389
(43) Veröffentlichungstag der Anmeldung: 13.06.2001
(73) Patentinhaber: XCELLSIS GmbH, 73230 Kirchheim/Teck-Nabern (DE)
(72) Erfinder: STROBEL, Barbara, D-89160 Dornstadt (DE); LIPPERT, Marco, D-89346 Bibertal-Bühl (DE); HASSERT, Alexandra, D-73117 Wangen (DE); SCHÜSSLER, Martin, D-89073 Ulm (DE)
(74) Vertreter: Kocher, Klaus-Peter
(86) Internationale Anmeldenummer: EP9904353
(87) Internationale Veröffentlichungsnummer: WO0004600

(56) Entgegenhaltungen:
- EP-A- 0 743 694
- EP-A- 0 834 948
- WO-A-97/25752
- US-A- 5 271 916
- CHEMICAL ABSTRACTS, vol. 130, no. 3, 18. Januar 1999 (1999-01-18) Columbus, Ohio, US; abstract no. 27205, HASHIZAKI, KATSUO ET AL: "Carbon monoxide removing apparatus, especially for reformed gas for polymer electrolyte fuel cells" XP002120510 -& PATENT ABSTRACTS OF JAPAN vol. 199, no. 902, 26. Februar 1999 (1999-02-26) & JP 10 302824 A (MITSUBISHI HEAVY INDUSTRIES), 13. November 1998 (1998-11-13) & JP 10 302824 A (MITSUBISHI HEAVY INDUSTRIES, LTD., JAPAN) 13. November 1998 (1998-11-13)
- PATENT ABSTRACTS OF JAPAN vol. 1996, no. 08, 30. August 1996 (1996-08-30) & JP 08 106913 A (AISIN AW CO LTD;AQUEOUS RES:KK), 23. April 1996 (1996-04-23)

## Beschreibung

Die Erfindung betrifft ein Brennstoffzellensystem gemäß dem Oberbegriff des Patentanspruchs 1.

Bei der Erzeugung eines wasserstoffreichen Gases aus einem Rohkraftstoff für den Betrieb von Brennstoffzellen entsteht ein Produktgas mit einem Anteil an Kohlenmonoxid von einigen Prozent. Bei der Wasserdampfreformierung von Methanol hat das dabei entstehende Reformat beispielsweise eine Temperatur von etwa 300° C. Vor dem Eintritt in die Brennstoffzelle muß die Kohlenmonoxidkonzentration auf ungefähr 10 ppm verringert und das Reformat auf die Betriebstemperatur der Brennstoffzelle, üblicherweise im Bereich von ungefähr 80° C abgekühlt werden. Hierzu wird bei herkömmlichen Brennstoffzellensystemen zwischen der Gaserzeugungsvorrichtung und der Brennstoffzelle eine Gasreinigungsstufe vorgesehen. Weiterhin werden zwischen der Gaserzeugungsvorrichtung und der Gasreinigung beziehungsweise zwischen der Gasreinigungsstufe und der Brennstoffzelle Reformatkühler vorgesehen.

Aus der EP 0 743 694 A1 ist ein Brennstoffzellensystem bekannt, bei dem mit Hilfe eines Reformers aus einem Methanol/Wassergemisch ein wasserstoffreiches, Kohlenmonoxid enthaltendes Gas erzeugt wird. Anschließend wird in einer Gasreinigungsstufe das Kohlenmonoxid unter Zugabe von Sauerstoff mit Hilfe der selektiven Oxidation aus dem Reformat entfernt. Zur Kühlung der Gasreinigungsstufe ist ein Wärmetauscher vorgesehen, der von Wasser oder Öl durchströmt wird. Zur Kühlung des Kühlmediums ist ein weiterer Flüssigkeits/Luftwärmetauscher vorgesehen.

Weiterhin ist aus der US 52 71 916 A1 eine zweistufige Vorrichtung zur selektiven Oxidation von Kohlenmonoxid in einem wasserstoffreichen Gasgemisch bekannt. Diese Gasreinigungsstufe weist ebenfalls einen Wärmetauscher auf, der vorzugsweise von einem flüssigen Kühlmedium mit einem Siedepunkt zwischen 160° und 175° C durchströmt wird. Vor dem Eintritt in eine nachgeschaltete Brennstoffzelle wird das Gasgemisch in einem weiteren von Wasser durchströmten Wärmetauscher auf die erforderliche Brennstoffzellentemperatur gekühlt.

Schließlich ist aus der WO 93/19005 A1 ein gattungsbildendes Brennstoffzellensystem bekannt. Bei dieser Vorrichtung wird in einem wasserstoffreichen Gasgemisch enthaltenes Kohlenmomoxid in einer zweistufigen Gasreinigungsstufe unter Zugabe von Sauerstoff selektiv oxidiert. In beiden Gasreinigungsstufen sind von einer Flüssigkeit durchströmte Wärmetauscher vorgesehen. Zusätzlich ist zwischen den beiden Stufen ein weiterer Wärmetauscher vorgesehen.

Es ist die Aufgabe der Erfindung, ein kompaktes, kostengünstig herstellbares und hinsichtlich der Kühlung der Gasreinigungsstufe verbessertes Brennstoffzellensystem zu schaffen.

Diese Aufgabe wird durch eine Vorrichtung mit den Merkmalen des Patentanspruchs 1 gelöst

Durch die Ausgestaltung der Gasreinigungsstufe als Gas-Gas-Wärmetauscher und die Verwendung des Anoden- und/oder Kathodenabgas der Brennstoffzelle als Kühlmedium wird eine vereinfachte Vorrichtung geschaffen, da kein zusätzlicher Kühlmittelkreislauf mit zugehörigem Flüssigkeits/Luftwärmetauscher benötigt wird. Dadurch verringert sich der benötigte Bauraum und die Kosten der Vorrichtung.

Der naturgemäß schlechtere Wärmedurchgang bei Gas-Gas-Wärmetauschern verhindert außerdem eine zu starke Ankopplung an das Kühlmedium. Dadurch kann verhindert werden, daß die Reaktion in der letzten Gasreinigungsstufe zu stark gekühlt wird und somit keine Oxidation mehr stattfinden kann, weil der Bedeckungsgrad des Katalysators mit Kohlenmonoxid zu hoch wird.

Weiterhin ist der Enthalpiestrom auf der Kühlseite, also im Anoden- und/oder Kathodenabgas, lastabhängig, so daß entsprechend der entstehenden Reaktionswärme bei der selektiven Oxidation bei großer Last mehr, bei kleiner Last weniger Energie abgeführt wird. Außerdem verbessert sich der Gesamtwirkungsgrad des Systems, falls das Anodenbeziehungsweise Kathodenabgas einem nachgeschalteten katalytischen Brenner zugeführt wird, da das Anodenbeziehungsweise Kathodenabgas beim Durchströmen des Wärmetauschers vorgewärmt wird. Diese Energie muß dann anschließend im katalytischen Brenner nicht mehr zugeführt werden. Insgesamt geht dem Gesamtsystem durch die Kühlung der Gasreinigungsstufe keine thermische Energie verloren.

Weiterhin kann bei dem erfindungsgemäßen Brennstoffzellensystem unter anderem auf zusätzliche Reformatkühler zwischen Gasreinigungsstufe und Brennstoffzelle und/oder zwischen Gaserzeugungsvorrichtung und Gasreinigungsstufe verzichtet werden, da das Kühlmedium im wesentlichen die Betriebstemperatur der Brennstoffzelle aufweist. Dadurch werden mehrere Funktionen in einem Bauteil vereint, wodurch zum einen weniger Zu- und Ableitungen benötigt werden und zum anderen Gewicht- und Platzersparnisse und die damit einhergehende Kostenreduzierung realisiert werden können.

Durch die Kühlmittelstromvariation mit Hilfe einer Bypassleitung mit zugehörigem Bypassventil und Steuergerät ist es möglich, in der Dynamik eine möglichst konstante Temperaturverteilung im Reaktorbett einzustellen und somit bei jeder Last eine minimale CO-Ausgangskonzentration zu erreichen.

Weiter Vorteile und Ausgestaltungen der Erfindung gehen aus den Unteransprüchen und der Beschreibung hervor. Die Erfindung ist nachstehend anhand zweier Zeichnungen näher beschrieben, wobei
- Fig. 1: die den prinzipiellen Aufbau eines erfindungsgemäßen Brennstoffzellensystems mit einem Wärmetauscher mit Bypassleitung und
- Fig. 2: ein weiteres Ausführungsbeispiel mit einer mehrstufigen Gasreinigungsstufe und einem Wärmetauscher ohne Bypassleitung zeigt.

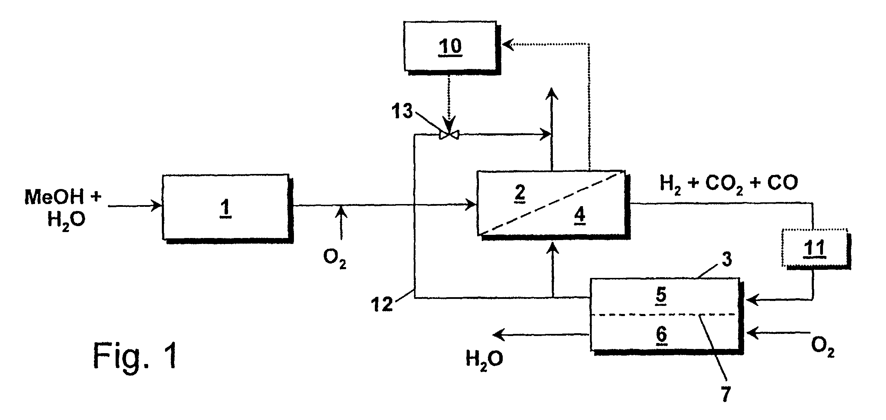

Das Brennstoffzellensystem gemäß Fig. 1 enthält eine Gaserzeugungsvorrichtung 1, eine Gasreinigungsstufe 2 und eine insgesamt mit 3 bezeichnete Brennstoffzelle. Die Brennstoffzelle 3 enthält einen Anodenraum 5 und einen Kathodenraum 6, die durch einen protonenleitende Membran 7 voneinander getrennt sind. In den Anodenraum 5 wird ein wasserstoffreiches Gas, in den Kathodenraum 6 Sauerstoff beziehungsweise Luft zugeführt. Die Membran 7 ist auf beiden Seiten mit einem geeigneten Katalysator versehen. Dadurch wird der Wasserstoff in der Anode oxidiert, wobei das verbleibende Proton durch die Membran zur Kathode wandern kann. Dort wird der Sauerstoff reduziert und verbindet sich mit dem Proton zu Wasserdampf. Bei dieser elektrochemischen Reaktion entsteht eine Spannung, die einer externen Last zugeführt werden kann.

In der Gaserzeugungsvorrichtung 1 wird aus einem Kraftstoff ein wasserstoffreiches Gas hergestellt. Hierbei handelt es sich vorzugsweise um eine Vorrichtung zur Wasserdampfreformierung und/oder zur partiellen Oxidation. Als Kraftstoff kann beispielsweise Methanol, Benzin oder andere kohlenwasserstoffhaltigen Substanzen verwendet werden. Obwohl das Ausführungsbeispiel anhand der Wasserdampfreformierung von Methanol beschrieben wird, soll der Schutzbereich nicht auf diese Anwendung beschränkt sein.

Bei der Wasserdampfreformierung wird ein Methanol/Wassergemisch an einem geeigneten Katalysator zu Wasserstoff und Kohlendioxid umgesetzt. Als Nebenprodukt entsteht zusätzlich Kohlenmonoxid. Das Methanol/Wassergemisch wird vorzugsweise in einer nicht dargestellten Verdampfereinheit vor dem Eintritt in die Gaserzeugungsvorrichtung verdampft und überhitzt. Bei der partiellen Oxidation wird zusätzlich Sauerstoff in den Gasstrom zugegeben.

Das im Gasgemisch enthaltene Kohlenmonoxid ist für die Brennstoffzelle 3 schädlich. Aus diesem Grunde wird zwischen der Gaserzeugungsvorrichtung 1 und der Brennstoffzelle 3 die Gasreinigungsstufe 2 angeordnet. Durch die Gasreinigungsstufe 2 wird der Kohlenmonoxidanteil im Gasgemisch auf Werte < 50 ppm reduziert. Dabei wird das Kohlenmonoxid an einem geeigneten Katalysator, beispielsweise Platin und/oder Ruthenium auf einem Träger aus Zeolith oder Aluminiumoxid, unter Zugabe von Sauerstoff selektiv oxidiert. Der Sauerstoff kann hierbei, wie im Ausführungsbeispiel dargestellt, in geeigneter Menge vor der Gasreinigungsstufe 2 in das Gasgemisch zugegeben werden. Es ist jedoch auch möglich, den Sauerstoff an einer oder mehreren Stellen direkt in die Gasreinigungsstufe 2 zuzuführen.

Die maximal zulässige CO-Eingangskonzentration für die Gasreinigungsstufe 2 ist stark limitiert durch die daraus resultierende adiabate Temperaturerhöhung. Da das Lambda, also das Verhältnis von Sauerstoff zu Kohlenmonoxid nicht zu klein sein darf, wird zusätzlich zum Kohlenmonoxid immer auch ein gewisser Anteil an Wasserstoff oxidiert. Die dabei frei werdende Energie trägt auch mit zur adiabaten Temperaturerhöhung bei. Wird die Gasreinigungsstufe 2 nicht aktiv gekühlt, so steigt die Temperatur schnell an und der Prozeß läuft auf einem zu hohen Temperaturniveau ab. Dies hat zur Folge, daß mit zunehmender CO-Eingangskonzentration mehr Wasserstoff und weniger Kohlenmonoxid oxidiert wird. Die Temperatur muß sich also in einem vorgegebenen Bereich bewegen. Durch teilweise Abfuhr der Reaktionswärme wird das Temperaturmaximum verringert, so daß eine Oxidation von höheren CO-Eingangskonzentrationen möglich wird. Durch die Temperaturkontrolle werden Umsatz und Selektivität erhöht, während die CO-Meubildung durch Annäherung an das Wasser-Gas-Shift-Gleichgewicht verringert wird.

Erfindungsgemäß wird als gasförmiges Kühlmedium das Anoden- und/oder Kathodenabgas oder Teilströme hiervon verwendet. Im den dargestellten Ausführungsbeispielen wird die Gasreinigungsstufe 2 beispielsweise vom Anodenabgas durchströmt. Die Verwendung des Anoden- und/oder Kathodenabgas als Kühlmedium weist sehr viele Vorteile auf. Zum einen braucht kein zusätzliches Kühlsystem beziehungsweise ein zusätzliches Kühlmedium vorgesehen werden, wodurch sich das Gesamtsystem wesentlich vereinfacht. Gas-Gas-Wärmetauscher sind verfügbare Bauteile, die keine aufwendige Konstruktion erforderlich machen und daher fertigungstechnisch kostengünstig zu realisieren sind. Selbstverständlich können erfindungsgemäß jedoch auch aufwendiger ausgeführte Gas-Gas-Wärmetauscher verwendet werden. Zum einen verhindert der naturgemäß schlechtere Wärmedurchgang bei Gas-Gas-Wärmetauschern eine zu starke Ankopplung der Reaktion an das Kühlmedium. Dadurch kann verhindert werden, daß die Reaktion zu stark gekühlt wird und dadurch keine Oxidation mehr stattfinden kann, da der Bedeckungsgrad des Katalysators mit Kohlenmonoxid zu hoch wird.

Weiterhin ist der Entalphiestrom auf der Kühlseite des Gas-Gas-Wärmetauschers lastabhängig, so daß ganz entsprechend der entstehenden Reaktionswärme bei der CO-Oxidation bei hoher Last mehr, bei geringer Last weniger Wärme abgeführt wird. Schließlich kann durch die resultierende Vorwärmung des Anoden und/oder Kathodenabgases der Gesamtwirkungsgrad des Systems erhöht werden, da diese Energie bei einer üblicherweise nachgeschalteten vollständigen katalytischen Oxidation des Anoden- und/oder Kathodenabgases nicht mehr erzeugt werden muß.

Zwischen der Gasreinigungsstufe 2 und der Brennstoffzelle 3 kann optional eine Entwässerungseinheit 11 zur Abscheidung von kondensierendem Wasser angeordnet werden. Weiterhin kann parallel zum Wärmetauscher 4 eine Bypassleitung 12 mit zugehörigem Bypassventil 13 vorgesehen werden. Hierbei kann das Bypassventil 13 an einer beliebigen Stelle in der Bypassleitung 12 angeordnet werden. Zur Ansteuerung des Bypassventils 13 ist außerdem ein Steuergerät 10 vorgesehen. In dem Steuergerät kann der gewünschte Bypassvolumenstrom anhand vorgegebener Kennfeldwerte und/oder in Abhängigkeit von der Temperatur im Kühlmedium und/oder im Reformat ermittelt und mit Hilfe einer Steuerung oder Regelung des Bypassventils 13 eingestellt werden. Die Temperatur des Kühlmediums oder des Reformatgasstromes wird an einer geeigneten Stelle in der Gasreinigungsstufe 2, dem Wärmetauscher 4 und/oder den zugehörigen Zu- beziehungsweise Ableitungen gemessen und dem Steuergerät zur Verfügung gestellt.

Wie bereits weiter oben ausgeführt sind Gas-Gas-Wärmetauscher bekannt, so daß auf Einzelheiten des Aufbaus hier nicht weiter eingegangen zu werden braucht. Vorzugsweise ist der Wärmetauscher durch eine Plattenanordnung realisiert, wobei das Kühlmedium und der Reformatgasstrom vorzugsweise im Gegenstrom geführt werden. Das für die selektive Oxidation in der Gasreinigungsstufe 2 notwendige Katalysatormaterial wird vorzugsweise als Beschichtung auf eine wärmeaustauschende Fläche im Wärmetauscher 4 aufgebracht, wobei die wärmeaustauschende Fläche ganz oder nur teilweise mit Katalysator beschichtet sein kann.

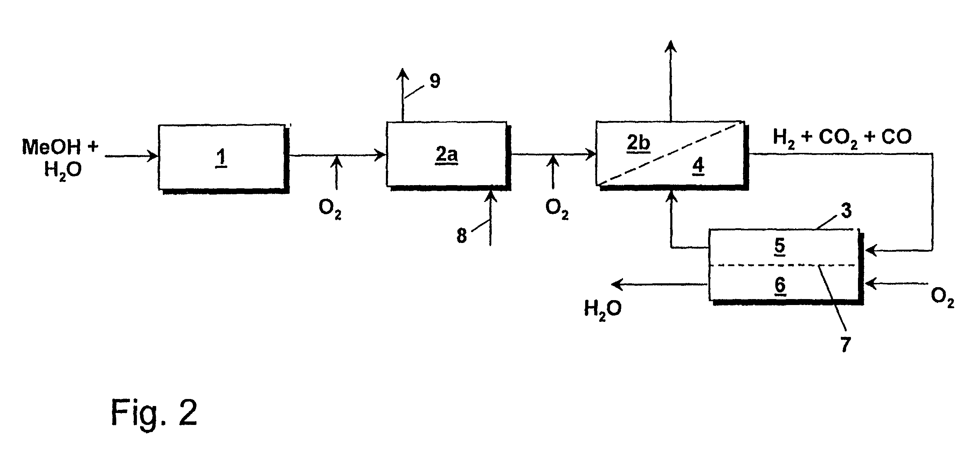

Fig. 2 zeigt ein weiteres Ausführungsbeispiel, wobei gegenüber Fig. 1 gleiche Teile mit gleichen Bezugszeichen gekennzeichnet sind. Abweichend von Fig. 1 weist die Gasreinigungsstufe gemäß Fig. 2 eine erste Stufe 2a und eine zweite Stufe 2b auf. Es ist jedoch auch möglich, weitere Stufen vorzusehen. Zur Kühlung der ersten Gasreinigungsstufe 2a kann diese von einem beliebigen Kühlmedium, beispielsweise einem Wärmeträgeröl, das über entsprechende Zu- und Ableitungen 8, 9 zu- beziehungsweise abgeführt wird, durchströmt werden.

Der Sauerstoff kann hierbei, wie im Ausführungsbeispiel dargestellt, jeweils in geeigneter Menge vor der jeweiligen Stufe 2a, 2b in das Gasgemisch zugegeben werden. Es ist jedoch auch möglich, den Sauerstoff an einer oder mehreren Stellen direkt in die Gasreinigungsstufen 2a, 2b zuzuführen. Im Unterschied zu Fig. 1 ist hier auch keine Bypassleitung und auch keine Entwässerungsvorrichtung vorgesehen. Es ist jedoch selbstverständlich möglich, die Merkmale aus den beiden Ausführungsbeispielen beliebig zu kombinieren. Neben der gezeigten Anordnung mit ölgekühlter ersten Gasreinigungsstufe 2a und gasgekühlter zweiter Gasreinigungsstufe 2b ist es auch möglich, alle Gasreinigungsstufen 2a, 2b mit Brennstoffzellenabgas zu kühlen. Entscheidend ist jedoch, daß die letzte Stufe der Gasreinigungsstufe 2b direkt mit dem Brennstoffzellenabgas gekühlt wird um das Reformat vor dem Eintritt in die Brennstoffzelle 3 auf die geeignete Betriebstemperatur zu bringen.

## Patentansprüche

1. Brennstoffzellensystem mit
- einer Brennstoffzelle, die einen Kathoden raum, einen Anodenraum und eine dazwischenliegende Polymerelektrolytmembran aufweist, wobei dem Kathodenraum ein sauerstoffhaltiges Gas und dem Anodenraum ein wasserstoffhaltiges Gas zugeführt wird,
- einer Gaserzeugungsvorrichtung, in der aus einem Brennstoff mit Hilfe der Wasserdampfreformierung und/oder partiellen Oxidation ein wasserstoffreiches, Kohlenmonoxid enthaltendes Reformat hergestellt wird,
- einer Gasreinigungsstufe, in der das Kohlenmonoxid im Reformat unter Zugabe von Sauerstoff an einem geeigneten Katalysator selektiv oxidiert wird, und
- einem in der Gasreinigungsstufe angeordneten und von einem Kühlmedium durchströmten Wärmetauscher zur Abfuhr thermischer Energie,
**dadurch gekennzeichnet,**
**daß** im gasgekühlten Wärmetauscher (4) als Kühlmedium das aus der Brennstoffzelle (3) austretende Anoden- und/oder Kathodenabgas verwendet wird.

2. Brennstoffzellensystem nach Anspruch 1,
**dadurch gekennzeichnet,**
**daß** die Gasreinigungsstufe (2) mehrstufig ausgeführt ist und daß der gasgekühlte Wärmetauscher (4) zumindest der letzten Gasreinigungsstufe (2b) zugeordnet ist.

3. Brennstoffzellensystem nach Anspruch 1,
**dadurch gekennzeichnet,**
**daß** parallel zum Wärmetauscher (4) eine Bypassleitung (12) für das Kühlmedium und ein zugehöriges Bypassventil (13) angeordnet ist.

4. Brennstoffzellensystem nach Anspruch 4,
**dadurch gekennzeichnet,**
**daß** ein Steuergerät (10) für die Ansteuerung des Bypassventils (13) anhand vorgegebener Kennfeldwerte und/oder in Abhängigkeit von einer Temperatur im Kühlmittel und/oder im Reformat vorgesehen ist.

5. Brennstoffzellensystem nach Anspruch 1,
**dadurch gekennzeichnet,**
**daß** eine wärmeaustauschende Fläche in der Gasreinigungsstufe (2) zumindest teilweise mit dem Katalysator zur selektiven Oxidation des Kohlenmonoxids beschichtet ist.

6. Brennstoffzellensystem nach Anspruch 1,
**dadurch gekennzeichnet,**
**daß** das Reformat und das Kühlmedium im Wärmetauscher (4) im Gegenstrom geführt sind.

7. Brennstoffzellensystem nach Anspruch 1,
**dadurch gekennzeichnet,**
**daß** stromab der Gasreinigungsstufe (2) eine Entwässerungseinheit (11) zur Abscheidung kondensierenden Wassers angeordnet ist.

## Claims

1. Fuel cell system with
- a fuel cell which has a cathode area, an anode area and a polymer electrolyte membrane lying between them wherein an oxygen-containing gas is supplied to the cathode area and a hydrogen-containing gas is supplied to the anode area,
- a gas generating device in which a hydrogen-rich carbon monoxide containing reform substance is produced from a fuel with the assistance of steam reformation and/or partial oxidation,
- a gas purification stage in which the carbon monoxide is oxidised in the reform substance with the feeding of oxygen to an appropriate catalytic converter, and
- a heat exchanger for the collection of thermal energy which is arranged in the gas purification stage and through which a coolant passes,
**characterised in that**
in the gas cooled heat exchanger (4) the anode and/or cathode waste gas leaving the fuel cell (3) is used as a coolant.

2. Fuel cell system according to claim 1
**characterised in that**
the gas purification stage (2) is designed in several stages and that the gas cooled heat exchanger (4) is assigned at least to the last gas purification stage (2b).

3. Fuel cell system according to claim 1
**characterised in that**
a bypass cable (12) for the coolant and an associated bypass valve (13) are arranged parallel to the heat exchanger (4).

4. Fuel cell system according to claim 4
**characterised in that**
a control device (10) is provided for controlling of the bypass valve (13) by reference to characteristic values and/or depending upon a temperature in the coolant and/or in the reform substance.

5. Fuel cell system according to claim 1
**characterised in that**
a heat exchanging surface in the gas purification stage (2) is at least partly coated with the catalytic converter for selective oxidation of the carbon monoxide.

6. Fuel cell system according to claim 1
**characterised in that**
the reform substance and the coolant are guided in the heat exchanger (4) in counter-flow.

7. Fuel cell system according to claim 1
**characterised in that**
downstream from the gas purification stage (2) a drainage unit (11) is arranged for the separation of the condensing water.

## Revendications

1. Système de pile à combustible avec
- une pile à combustible, qui présente une chambre cathodique, une chambre anodique et une membrane électrolytique polymère intermédiaire, la chambre cathodique étant remplie d'un gaz contenant de l'oxygène et la chambre anodique étant remplie d'un gaz contenant de l'hydrogène,
- un dispositif de production de gaz dans lequel on prépare un produit de reformage contenant du monoxyde de carbone, riche en hydrogène, à partir d'un combustible à l'aide d'un reformage avec vapeur d'eau et/ou une oxydation partielle,
- un palier de purification de gaz dans lequel le monoxyde de carbone dans le produit de reformage est oxydé sélectivement par addition d'oxygène sur un catalyseur approprié, et
- un échangeur de chaleur pour éliminer l'énergie thermique, placé dans le palier de purification de gaz et traversé par un milieu de refroidissement,
**caractérisé en ce qu'**on utilise dans l'échangeur de chaleur (4) refroidi par le gaz comme milieu de refroidissement le gaz anodique et/ou cathodique s'échappant de la pile à combustible (4).

2. Système de pile à combustible selon la revendication 1, **caractérisé en ce que** le palier de purification de gaz (2) est réalisé en plusieurs paliers et que l'échangeur de chaleur (4) refroidi par le gaz est coordonné au moins au dernier palier de purification de gaz (2b).

3. Système de pile à combustible selon la revendication 1, **caractérisé en ce que** sont placées parallèlement à l'échangeur de chaleur (4) une conduite de dérivation (12) et une vanne de dérivation (13) correspondante.

4. Système de pile à combustible selon la revendication 1, **caractérisé en ce qu'**un appareil de commande (10) pour la commande de la vanne de dérivation (13) en fonction de valeurs de diagramme caractéristiques prédéterminées et/ou en fonction d'une température dans le milieu de refroidissement et/ou du produit de reformage.

5. Système de pile à combustible selon la revendication 1, **caractérisé en ce qu'**une surface échangeuse de chaleur dans le palier de purification de gaz (2) est recouverte au moins en partie d'un catalyseur pour l'oxydation sélective du monoxyde de carbone.

6. Système de pile à combustible selon la revendication 1, **caractérisé en ce que** le produit de reformage et le milieu de refroidissement dans l'échangeur de chaleur (4) sont entraînés à contre-courant

7. Système de pile à combustible selon la revendication 1, **caractérisé en ce qu'**en aval du courant du palier de purification de gaz (2) est placée une installation de déshydratation pour séparer l'eau de condensation.
